# EUROPEAN PATENT SPECIFICATION

(11) **EP 2 365 186 B1**
(45) Date of publication and mention of the grant of the patent: **10.12.2014**
(21) Application number: 11154108.2
(22) Date of filing: 11.02.2011
(51) Int. Cl.: F01D 5/14, F01D 5/28, F01D 21/04, F01D 25/16

(54) **Improvements relating to layered composite components**
Verbesserungen im Zusammenhang mit geschichteten Verbundstoffkomponenten
Améliorations portant sur des composants composites stratifiés

(30) Priority: 04.03.2010 GB 201003588
(43) Date of publication of application: 14.09.2011
(73) Proprietor: Rolls-Royce plc, London SW1E 6AT (GB)
(72) Inventor: McMillan, Alison, Uttoxeter, Staffordshire ST14 7BY (GB)
(74) Representative: Roberts, Nicholas John

(56) References cited:
- EP-A1- 1 593 816
- EP-A2- 1 357 295
- US-B1- 6 428 269

## Description

The present invention relates to layered composite components. Layered composite components are employed in many applications, for example in gas turbine engines, in which, for example, aerofoil components and casing structures may be made from composite materials. Layered composite components comprise a matrix material, for example an organic matrix, e.g. epoxy resin, a metal matrix or a ceramic matrix. Within the matrix may be embedded reinforcing layers, commonly in the form of plies of braided, woven, non-woven or knitted fibres.

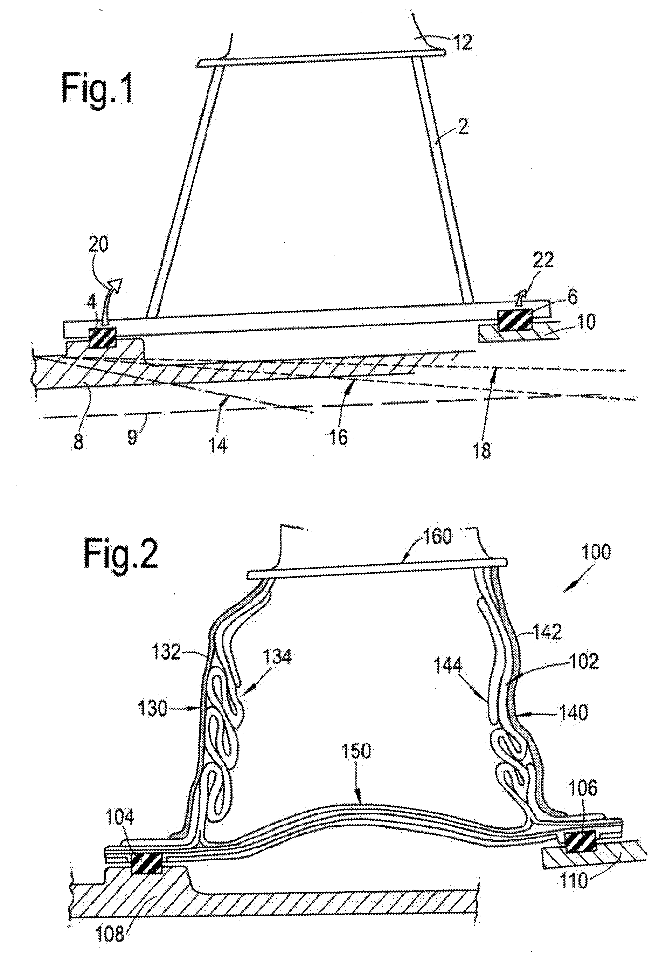

In the aeronautical and other industries, there are instances where a component is required to deform or adapt to a changing circumstance. A front bearing housing in a gas turbine engine is one such example. Figure 1 is a simplified representation of a front bearing housing for a gas turbine engine, typically made from a metal. As illustrated, the housing comprises an annulus of trapezoidal cross-section that imparts stiffness to the housing. The housing conventionally supports two bearings 4, 6 which may be roller bearings. The front bearing 4 supports a low pressure (LP) shaft 8. In conventional arrangements, the LP shaft 8 spans the full length of the engine, connecting a LP turbine, powered by the hot core flow gas, to a fan. Rotation of the LP turbine about a centre of rotation 9 is transmitted to the fan via torque in the shaft 8. The front bearing 4 provides radial location for the LP shaft 8. In the case of a three shaft engine, the rear bearing 6 supports an intermediate pressure (IP) shaft 10, which transmits power from an IP turbine. In the case of a two shaft engine, the rear bearing 6 supports a high pressure (HP) compressor rotor. Figure 1 illustrates a front bearing housing in which front and rear bearings 4, 6 are roller bearings. However, it will be understood that either or both bearings may be ball bearings. Ball bearings not only provide radial location, but also enable the transmission of thrust loads. For any rotor system, there must be at least one ball bearing support. Support at the other end of the rotor is by a roller bearing. In some instances an additional roller bearing may be necessary as the radial location capability of a ball bearing is limited by ball diameter. Such practical details impart a complexity to the structure of a front bearing housing that, for the sake of clarity, is not illustrated in Figure 1.

Spoke structures 12 extend from the bearing housing annulus 2 into the core gas flow and are joined to an outer annulus (not shown). For some bearing housing structures, the spokes are kept to a minimum number (between about 5 and 10), and simply provide structural support between the bearing housing and the engine mount. In other cases, the spokes also function as aerofoil stators, and in such cases, the number of spokes would be very much higher (20 or more).

One of the particular limiting duties of the front bearing housing structure is to survive a fan blade off event. Fan blade off (FBO) is an extreme event, and the engine is not expected to continue running after such an event. However the engine must shut down safely and not represent a hazard for the aircraft during the "fly home". An engine that has suffered a FBO event will not be powered during fly home, but nevertheless, the relative speeds of the air and the aircraft cause the remaining fan blades to turn, a process known as "windmilling". Speed of rotation during windmilling is low relative to a powered engine, but is still significant, in the region of 5 to a few tens of rotations per second.

A FBO event has serious implications for the engine structures, particularly the LP components. If one fan blade is lost from the fan set, this generates an out of balance load in the rotating LP structure. A fan blade is radially very long compared with other components, meaning that the out of balance effect of a missing fan blade is severe, giving rise to high loads in the bearings supporting the LP shaft. To design for such loads would be wasteful, as the loads are only applied in an extreme case when the engine is not actually working. It is therefore preferable to consider the LP rotor system rotating about a new centre of mass, and to allow that centre of mass to change. Following a FBO event, the engine shuts down, and rotation speed reduces. The LP shaft 8 bends, and the front bearing housing deforms to allow the rotation centre line to move. Initially it is only the fan, or front end of the shaft 8 that moves eccentrically and the shaft 8 is bent as illustrated by dashed line 14. As the shaft 8 straightens, it orbits the original centre line in a cone, extending through dashed lines 16 and 18. The thick roller bearings 4, 6 are displaced as indicated by the arrows 20 and 22.

Various attempts have been made to enable front bearing housing structures to change to allow the centre of rotation of the LP shaft to move following a FBO event. Conventionally, designs revolve around spring and fuse constructions for metallic structures, in which a rigid frangible connection breaks above a threshold load, to allow interaction of the front bearing housing with a resilient or elastic member e.g. in US2005/0232755 and US2003/0233822. US6428269 describes a joint with a frangible linkage which is designed to substantially eliminate shear forces on the frangible linkage so that the frangible linkage is subjected to predominantly tensile force.

According to the present invention, there is provided a layered composite component comprising a plurality of plies of reinforcement fibres embedded in a matrix material, the component comprising a fuse region in which an initiating feature selected from a group comprising a film element or plurality of film elements, or partial lamination between adjacent plies and which is operable to initiate delamination of plies within the fuse region such that the fuse region delaminates above a predetermined load condition; wherein the plies in the fuse region have an S shaped (134) configuration..

A layered composite component is significantly lighter than comparable metal components and therefore offers considerable weight saving advantages. In addition, the methods of manufacture of composite components offer more structural design options than their metallic equivalents.

The composite component may be an organic matrix composite, a metal matrix composite or a ceramic matrix composite.

The component may be operable to transition from a rigid behaviour regime to a resilient behaviour regime on occurrence of delamination within the fuse region.

Controlled delamination thus enables the structural stiffness of the component to change to accommodate changing requirements based on the action of a fuse region and initiating feature that are integral parts of the component. In the case of a front bearing housing for a gas turbine engine, the component can change from being very stiff, to centre shaft bearings during normal operating conditions, to being sufficiently pliable to allow eccentric shaft rotation following a FBO event.

The fuse region may comprise a plurality of initiating features, operable to initiate successive delaminations on application of successively changing load conditions.

The resilient behaviour regime may comprise a plurality of states of decreasing stiffness, the component being operable to transition between successive states on occurrence of successive delaminations. In this manner, the component may automatically adapt to the level of stiffness required.

The plies in the fuse region may be discontinuous or may not be coplanar with adjacent plies.

The initiating feature may comprise a film element of release material which inhibits adhesion between resin on opposite sides of the film element. The initiating feature may comprise a plurality of film elements of release material. The film elements may be sufficiently robust to be self-supporting in the absence of the resin matrix, or the film elements may be non-self-supporting, for example they may be in the form of a liquid or semi-liquid (such as grease) layer, or a powdery layer. The film elements may be made from a polymeric low-stick composition such as PTFE.

The initiating feature may comprise adjacent plies that are only partially laminated together.

Plies in the fuse region may be non planar, thus encouraging preferential delamination and deformation of the component.

Plies in the fuse region may have a folded configuration, each fold defining a first volume, between adjacent outer surfaces of an outer ply, and a second volume, between adjacent inner surfaces of an inner ply.

The initiating feature may comprise those regions bounding the first and second volumes over which adjacent outer surfaces of an outer ply are laminated and adjacent inner surfaces of an inner ply are laminated.

The first and second volumes may comprise a filler material.

The Initiating feature may be bounded by through thickness reinforcing elements.

The component may comprise a front bearing housing of a gas turbine engine.

The layered composite component may comprise a plurality of plies of reinforcement fibres embedded in a matrix material, the component being operable to transition from a rigid behaviour regime to a resilient behaviour regime on occurrence of a fuse event, wherein the fuse event comprises delamination of at least two adjacent plies.

The composite component may provide apparatus for supporting an aerofoil on a rotatable hub, the apparatus comprising an aerofoil, a rotatable hub and a layered composite component between the aerofoil and the hub and comprising a plurality of plies of reinforcement fibres embedded in a matrix material, the composite component comprising a fuse region in which an initiating feature is operable to initiate delamination of plies within the fuse region such that the fuse region delaminates above a predetermined load condition.

The predetermined load condition may be reached when the aerofoil is damaged.

For a better understanding of the present invention, and to show more clearly how it may be carried into effect, reference will now be made, by way of example, to the accompanying drawings, in which:-
Figure 1 is an illustration of a conventional front bearing housing for a gas turbine engine.
Figure 2 is an illustration showing a partial sectional view of a composite front bearing housing.
Figure 3 is an exploded view of a region of the front bearing housing of Figure 2.
Figure 4a is an exploded view of a further region of the front bearing housing of Figure 2.
Figure 4b is an exploded view of the region of Figure 4a under a deformation moment.
Figure 5 is a front sectional view of a front bearing housing.
Figure 6 is an illustration showing a partial sectional view of another embodiment of composite front bearing housing.

Figure 2 illustrates a front bearing housing 100. The front bearing housing 100 comprises an annulus 102 of substantially trapezoidal cross-section that supports two bearings 104, 106. The bearings 104, 106 may be roller bearings, ball bearings, or any other appropriate type or configuration of bearings. The front bearing 104 supports a low pressure (LP) shaft 108. The LP shaft 8 spans the full length of the engine, connecting a LP turbine, powered by the hot core flow gas, to a fan. Rotation of the LP turbine is transmitted to the fan via torque in the shaft 108. The front bearing 104 provides radial location for the LP shaft 108. The rear bearing 106 supports an intermediate pressure (IP) shaft 110, which transmits power from an IP turbine. Alternatively, the rear bearing 106 may support a high pressure (HP) compressor rotor.

The annulus 102 of the front bearing housing 100 is formed from a layered composite material. The material is carbon or glass fibre reinforced with an organic resin matrix, having an appropriate ability to withstand temperatures. In higher temperature applications, it may be appropriate to use a metal matrix composite or a ceramic matrix composite.

The annulus 102 comprises side walls 130, 140, an inner base wall 150 and an outer wall 160. The side walls each comprise a first outer section 132, 142 comprising several plies laminated together. The plies of the outer sections 132, 142 are not planar, but follow a curved path from the inner base wall 150 of the annulus to the outer wall 160. The outer sections 132, 142 are approximately disc or cone shaped, covering the entirety of the outer sides of the annulus and are thus illustrated in Figure 2 as true cross sections.

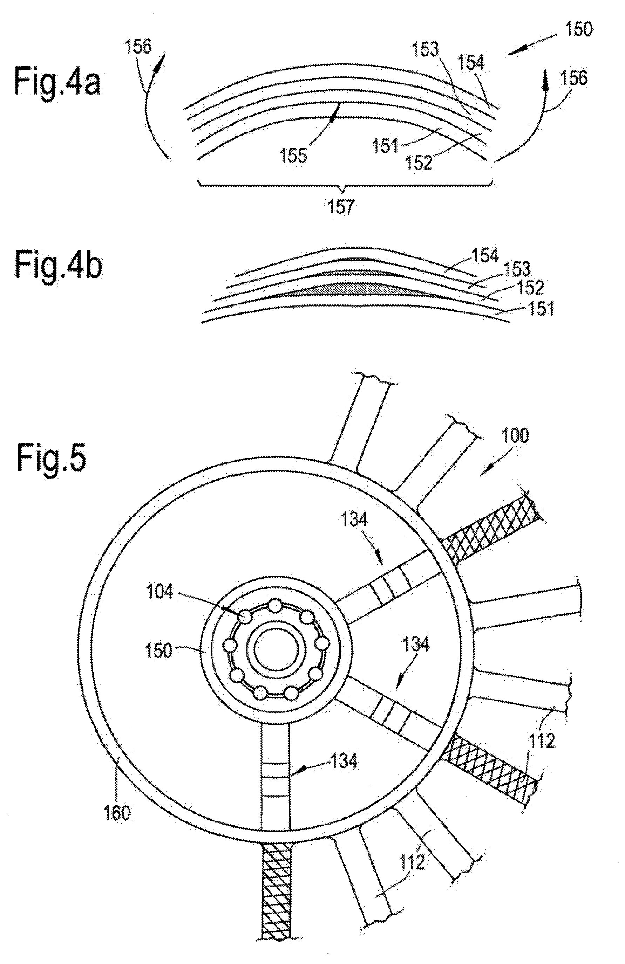

The side walls 130, 140 each further comprise an inner section 134, 144 formed from several groups of plies that are looped, or folded back upon each other to create a fuse region. The inner sections 134, 144 may be approximately disc or cone shaped, covering the entirety of the outer sides of the annulus as in the case of the outer sections 132, 142. Alternatively, the inner sections may comprise radial reinforcement spokes, as illustrated for example in Figure 5.

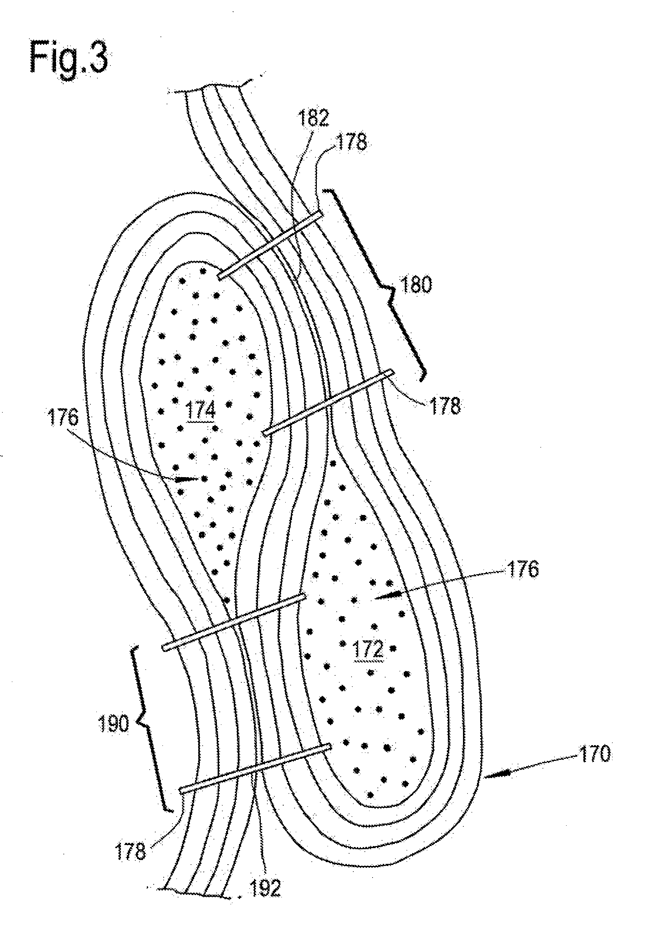

Figure 3 shows an enlarged view of a single loop 170 doubled back upon itself. It can be seen that each fold or loop of the inner sections 134, 144 consists of several plies of reinforcement material. A single loop 170 is formed, defining a first volume 172 between what would be outer plies of the inner section 134, 144. The loop is folded back upon itself to define a second volume 174 between what would be inner plies of the inner section 134, 144. The first and second volumes 172, 174 are filled with a filler material 176. The filler material 176 may be an expanding foam filler or may be a hollow former. A hollow former may remain captive in the component or alternatively may be removed after forming. The loop 170 is sealed over a first region or boundary 180, enclosing the first volume 172, by laminating the adjacent plies together over the region 180. The loop 170 is folded back upon itself and sealed to the preceding part of the inner section 134, 144 over a second region or boundary 190, enclosing the second volume 174, by laminating the adjacent plies together over the region 190. Within the regions 180, 190, at the surface where adjacent plies are laminated together to seal the volumes 172, 174, (the inter laminar surfaces) the lamination may be weakened by a low friction membrane 182, 192, or by one or more small flakes of low friction membrane. Alternatively, the inter laminar surface may be weakened by being only partially laminated. The weakened inter laminar surface causes preferential delamination of the surface under high loading. The weakened inter laminar surface thus acts as an initiating feature, initiating delamination of the boundary regions 180, 190. As a further alternative, the inter laminar surface could be a normal inter laminar surface. In this case, the inter laminar surface acts as an initiating feature and preferentially delaminates under the sear loads of a FBO event owing to the small area over which the inter laminar surface is laminated. Z-pins, tufts or stitches 178 extend through the double thickness of the plies of the inner section at the boundaries of the regions 180, 190 by which the loop 170 is sealed. Other forms of through-thickness reinforcement may be used as appropriate.

Under a load condition such as that generated by a FBO event, the fuse region formed by inner sections 134, 144 preferentially delaminates at the regions 180, 190 over which loops 170 are sealed. The regions 180, 190, which may be weakened by the presence of one or more membranes or by partial lamination, act as initiating features, initiating delamination of the loops. Such delamination of one or more loop regions leads to the generation of a spring, causing the front bearing housing to transition from rigid to at least partially resilient behaviour. The stiffness of the spring formed by the looped or folded inner sections 134, 144 depends on the number of boundary regions 180, 190 that have been delaminated. The greater the number of boundary regions that have delaminated, the lower the stiffness of the spring. Each successive boundary delamination is initiated at a greater out of balance load, enabling the structure to automatically adjust itself for the level of out of balance encountered. This level may vary depending upon whether only partial blade failure or a full FBO event has occurred.

The loops 170 are engineered so that after delamination, the loops 170 do not remain in contact. In this manner, the behaviour of the inner sections is step-wise linear, each loop exhibits linear elastic behaviour meaning the section exhibits linear elastic behaviour until another boundary region 180, 190 is delaminated. As an alternative, the loops 170 may be engineered so that contact is maintained and a pressure load may be generated pushing the contacting surfaces together. Such contact provides a mechanism for dissipating energy, which could help to reduce the windmill rotation speed of the fan. However, a FBO event generates a large amount of energy for dissipation and contacting loop surfaces can cause problems as a result of local heating of the friction surfaces. Repeated squeezing of the expanding foam filler 176 also has an energy dissipating function, but this is not significant within the scale of the energy to be dissipated. The design choices made in this respect are based upon the material capability, and ensuring an acceptable level of vibration amplitude and frequency during windmill. The vibration amplitude and frequency must be acceptable both from the point of view of humans (pilot ability to use the aeroplane controls, and passenger comfort), and also for the mechanical structure of the engine mounts and the airframe itself (fatigue driven by the windmill vibration).

Figure 4 is an enlarged view of the inner base wall 150 of the annulus 102. The base wall 150 is arched outward towards the outer wall 160 defining a fuse region 157. The inner wall comprises several plies and is illustrated in the figures as a continuous cylinder. The inner wall 150 could also comprise a set of struts applied to the inside or outside of a supporting full cylinder.

The base wall 150 comprises a number of blocks of plies 151 to 154, between each of which there may be a low friction membrane or a sprinkling of flakes of such membrane placed to initiate delamination. Within the wall 150 there is at least one such layer 155 that acts as an initiating feature and there may be several additional layers. Under the loads generated by a FBO event, a moment is applied to the base wall 150 in the direction of arrows 156. This moment causes delamination and the resulting deformation of the base wall 150 is illustrated in Figure 4b, with the extent of the delamination indicated by shading. Once per revolution of the LP shaft 108, the delaminated plies are opened up as illustrated in Figure 4b, and are then completely closed as the out of balance load rotates. The inner base wall thus behaves as a leaf spring above the threshold load condition at which delamination is initiated by the layer 155 of membrane or flakes of membrane. Each block 151 to 154 may comprise a number of individual plies and the number of blocks may be varied from the four illustrated in Figure 4. For example the wall may comprise more than four blocks of plies.

Figure 5 illustrates a font sectional view of an inner part of the front bearing housing. A bearing system 104 is shown in the middle. Spoke like looped or folded inner sections 134 of the side wall 130 are shown within an inner annulus. The lower portions of spokes or aerofoils 112 are shown extending from some of the outer circumference of the annulus 102.

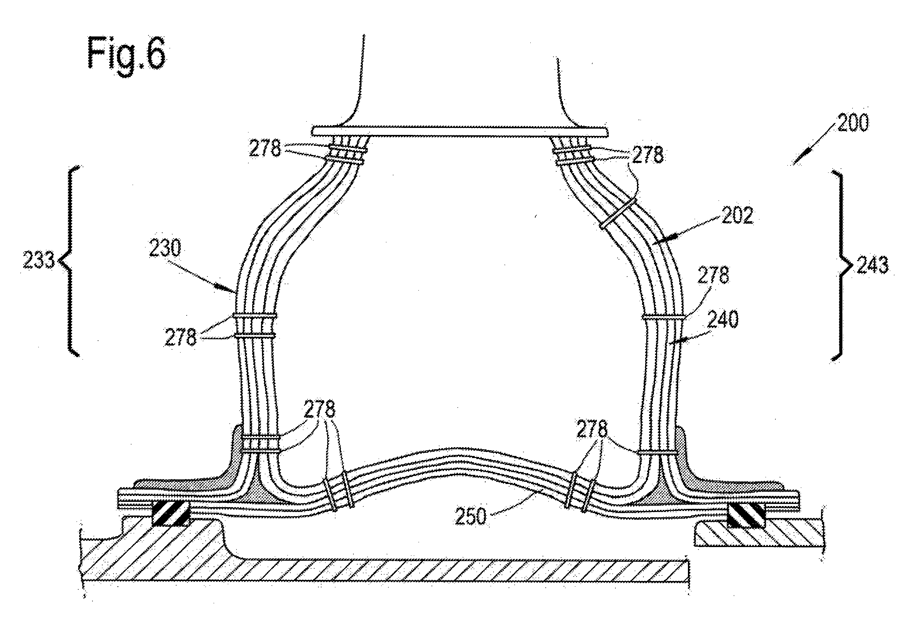

Another embodiment of front bearing housing 200 is illustrated in Figure 6. As can be seen from the figure, the embodiment of Figure 6 differs from that of Figure 2 in that the side walls 230, 240 comprise a single section that is arched, in a similar manner to the inner base wall 250, to define fuse regions 233, 243. The leaf spring concept of the inner wall 250 is thus also employed for the side walls 230, 240. In this embodiment, the side walls are approximately disc or cone shaped, covering the entirety of the outer sides of the annulus. The side walls 230, 240 illustrated in Figure 6 are therefore true cross sections. A spoked configuration, as discussed with respect to the embodiment of Figure 2 could also be employed. Delamination is preferentially initiated in desired areas through the use of a layer of low friction membrane, flakes of such low friction membrane, or partial lamination of plies, each of which acts as an initiating feature, initiating delamination. Thus, under the load condition generated by a FBO event, delamination is initiated in the desired areas, causing the side walls 230, 240, as well as the inner base wall 250, to behave as leaf springs. Z pins 278, stitches, tufting or other forms of through-thickness reinforcement extend through the plies of the side walls 230, 240 and the base wall 250 to prevent delamination growth to critical regions (for example the deltoid regions at the corners of the annulus 202). Such through thickness reinforcement may also be used to fine tune the amount of force required to achieve delamination under FBO event loads. The annulus 202 of Figure 6 is predominantly arched outwards (convex on both sides), but it could also be corrcave. In a preferred embodiment, the side walls 230, 240 are slightly "S" shaped, the double curvature managing the tension in the outer layer and forcing the inner layer to buckle inwards to cause the delamination.

Methods of manufacture of the two embodiments disclosed above are now discussed. In the case of the embodiment of Figure 6, the forming the annulus 202 can be unidirectional (UD) material, 2D weaves, non crimp fabrics (NCFs) or 3D woven material. The material is draped over the curvature and as the shape is not flat (the trapezium is not square) there is an excess of material at the outer diameter. This excess is coped with for woven material by shearing the material at the diagonals, or more generally by cutting darts. The material properties are not wholly axially symmetric, and such behaviour is therefore approximated through the use of many plies and by off-setting each ply by an angle to give equal over of each orientation of fibre. Alternatives include braiding, which can build a cone shape; filament winding (provided the cone angle is not too steep); and tailored fibre placement.

In the case of the embodiment of Figure 2, where the inner sections 134, 144 cover the full circle, rather than just being spokes, braiding is required, preferably 2 ½ D braiding where the axial fibre is used to shape the material by fixing the diameter. Alternatively, the shape may be built up by applying plies, or more conveniently tape laying (or automated tape laying), onto an undulating conical mandrel. The material is built up at full ply thickness, as a cone with an undulating outer diameter. The core rings are slipped over and into the material to the points where the loops need to form. The material is draped over the core rings and pushed back, so that the cone is collapsed onto itself, with each loop anchored in place. Z-pins, stitches, or tufting may be used to hold the preform thus constructed together. Any through-thickness reinforcement necessary for delamination control is also put in place. The finished shape is put into a mould and processed. The core rings form a captive part of the assembly. Core rings must be solid enough to provide pressure during the processing and curing, they may be hollow but with sufficient stiffness, or hollow with a ribbed or fixed foam or honeycomb structure. They may be hollow and filled with expanding foam, which would apply internal pressure during processing and support the ring. Alternatively they may be solid (although this can represent a weight concern).

For both embodiments, a resin infusion process such as RTM is employed. Where the material is predominantly in the form of plies, a pre-preg approach could be employed.

Conventionally, a ply lay-up is symmetric about a centre ply or pair of plies. This ensures that the material is balanced, meaning that there is no coupling between tension or compression and bending and between moments and contraction or lengthening. According to the present invention, this requirement is not strictly relevant, and such a mechanism could play a role in precipitating/suppressing delamination, and then managing the distance between delaminated surfaces. As discussed above, this could influence the damping behaviour of the structure. The leaf spring arch structures illustrated with 4 layers to suggest an asymmetric lay-up but symmetric lay ups, with the middle two layers being equal, or with any number of layers are also included within the scope of the present invention.

Ensuring lay up symmetry is a macro scale means of achieving a balance, but the unbalance still exists locally in the interfaces near the edges and ends of plies, particularly where there is a large change of ply angle between two plies. Choice of ply angle between layers is thus a tool that can help control delamination.

In both circumstances, residual stresses will also play a role. Residual stresses are a result of the cure cycle where the resin material is subject to applied temperature and pressure, and an exothermic chemical reaction. Control of surface temperature / cooling rate, and even surface friction has an effect on the residual stress state. This can be controlled so that delamination is more easily precipitated in the mid-span of the leaf-spring arch areas, and suppressed at the corners.

It will be appreciated that the present invention provides a structure in which a substantially rigid component transitions to a resilient behaviour regime when experiencing a load condition outside of the normally expected service loads. Preferential delamination is initiated at certain key areas of the component, creating a composite spring, which may be in the form of a leaf spring. Delamination thus acts as a mechanical fuse, allowing normal service loads to be resisted in a substantially rigid manner but releasing to absorb energy and allow deformation under abnormal load conditions. The present invention has been illustrated using the example of a front bearing housing in a gas turbine engine. However, it will be understood that the invention may be used to beneficial effect in other structures such as for example vehicle bumpers, side impact bars, motorway or race track perimeter fencing or railway buffers.

## Claims

1. A gas turbine layered composite component (100,200) comprising a plurality of plies of reinforcement fibres embedded in a matrix material, **characterised in that** the composite component comprising a fuse region (134, 144, 157, 233, 244) in which an initiating feature (134,144,157,233,244) selected from a group comprising a film element or plurality of film elements, or partial lamination between adjacent plies and which is operable to initiate delamination of plies within the fuse region such that the fuse region delaminates above a predetermined load condition; wherein the plies in the fuse region have an S shaped (134) configuration.

2. A layered composite component as claimed in claim 1, wherein the fuse region comprises a plurality of initiating features, operable to initiate successive delaminations on application of successively changing load conditions.

3. A layered composite component as claimed in any one of the preceding claims, wherein the plies in the fuse region are discontinuous or are not coplanar with adjacent plies.

4. A layered composite component as claimed in any one of the preceding claims, wherein plies in the fuse region have an arcuate configuration.

5. A layered composite component as claimed in any one of claims 1 to 4, wherein plies in the fuse region have a folded configuration, each fold defining a first volume (172), between adjacent outer surfaces of an outer ply, and a second volume (174), between adjacent inner surfaces of an inner ply.

6. A layered composite component as claimed in claim 5, wherein the initiating feature comprises those regions bounding the first and second volumes over which adjacent outer surfaces of an outer ply are laminated and adjacent inner surfaces of an inner ply are laminated.

7. A layered composite component as claimed in claim 5 or 6, wherein the first and second volumes comprise a filler material (176).

8. A layered composite component as claimed in any one of the preceding claims, wherein the Initiating feature is bounded by through thickness reinforcing elements (178).

9. A layered composite component as claimed in any one of the preceding claims, wherein the component comprises a front bearing housing (2) of a gas turbine engine.

## Patentansprüche

1. Geschichtete Verbundstoffkomponente einer Gasturbine (100, 200), umfassend eine Vielzahl von Lagen von Verstärkungsfasern, die in einem Matrixmaterial eingebettet sind, **dadurch gekennzeichnet, dass** die Verbundstoffkomponente einen Schmelzbereich (134, 144, 157, 233, 244) aufweist, in dem ein einleitendes Merkmal (134, 144, 157, 233, 244), ausgewählt aus einer Gruppe, bestehend aus einem Filmelement oder einer Vielzahl von Filmelementen, oder einer teilweisen Laminierung zwischen benachbarten Lagen, und die betriebsbereit ist, um die Delaminierung von Lagen innerhalb des Schmelzbereichs einzuleiten, so dass der Schmelzbereich über einer vorbestimmten Ladebedingung delaminiert; wobei die Lagen im Schmelzbereich eine S-förmige (124) Konfiguration aufweisen.

2. Geschichtete Verbundstoffkomponente nach Anspruch 1, wobei der Schmelzbereich eine Vielzahl von einleitenden Merkmalen umfasst, die betriebsbereit sind, um aufeinander folgende Delaminierungen bei der Anwendung von aufeinander folgenden sich ändernden Ladebedingungen einzuleiten.

3. Geschichtete Verbundstoffkomponente nach einem der vorhergehenden Ansprüche, wobei die Lagen im Schmelzbereich diskontinuierlich oder nicht koplanar mit benachbarten Lagen sind.

4. Geschichtete Verbundstoffkomponente nach einem der vorhergehenden Ansprüche, wobei Lagen im Schmelzbereich eine gekrümmte Konfiguration aufweisen.

5. Geschichtete Verbundstoffkomponente nach einem der Ansprüche 1 bis 4, wobei Lagen im Schmelzbereich eine gefaltete Konfiguration aufweisen, wobei jeder Falz ein erstes Volumen (172) zwischen benachbarten äußeren Flächen einer äußeren Lage und ein zweites Volumen (174) zwischen benachbarten inneren Flächen einer inneren Lage aufweist.

6. Geschichtete Verbundstoffkomponente nach Anspruch 5, wobei das einleitende Merkmal diejenigen Bereiche umfasst, die an das erste und das zweite Volumen angrenzen, über denen benachbarte äußere Flächen einer äußeren Lage laminiert sind und benachbarte innere Flächen einer inneren Lage laminiert sind.

7. Geschichtete Verbundstoffkomponente nach Anspruch 5 oder 6, wobei das erste und das zweite Volumen ein Füllmaterial (176) umfassen.

8. Geschichtete Verbundstoffkomponente nach einem der vorhergehenden Ansprüche, wobei das einleitende Merkmal durch durchgehende Verstärkungselemente (178) gebunden ist.

9. Geschichtete Verbundstoffkomponente nach einem der vorhergehenden Ansprüche, wobei die Komponente ein Gehäuse (2) des vorderen Lagers eines Gasturbinenmotors umfasst.

## Revendications

1. Composant composite stratifié de turbine à gaz (100, 200) comprenant une pluralité de couches de fibres de renfort noyées dans un matériau matriciel, **caractérisé en ce que** le composant composite comprend une région de fusion (134, 144, 157, 233, 244) dans laquelle un élément initiateur (134, 144, 157, 233, 244) est choisi dans un groupe comprenant un élément de film ou une pluralité d'éléments de film ou une stratification partielle entre des couches adjacentes et peut fonctionner pour initier le décollement des couches à l'intérieur de la région de fusion de sorte que la région de fusion se décolle au-dessus d'une condition de charge prédéterminée ; dans lequel les couches dans la région de fusion ont une configuration en forme de S (134).

2. Composant composite stratifié selon la revendication 1, dans lequel la région de fusion comprend une pluralité d'éléments initiateurs, permettant d'initier des décollements successifs lors de l'application de conditions de charge évoluant successivement.

3. Composant composite stratifié selon l'une quelconque des revendications précédentes, dans lequel les couches dans la région de fusion sont discontinues ou ne sont pas coplanaires avec les couches adjacentes.

4. Composant composite stratifié selon l'une quelconque des revendications précédentes, dans lequel les couches dans la région de fusion ont une configuration arquée.

5. Composant composite stratifié selon l'une quelconque des revendications 1 à 4, dans lequel les couches dans la région de fusion ont une configuration pliée, chaque pli définissant un premier volume (172), entre des surfaces externes adjacentes d'un pli externe, et un second volume (174), entre des surfaces internes adjacentes d'une couche interne.

6. Composant composite stratifié selon la revendication 5, dans lequel l'élément initiateur comprend des régions qui délimitent les premier et second volumes sur lesquels les surfaces externes adjacentes d'une couche externe sont stratifiées et des surfaces internes adjacentes d'une couche interne sont stratifiées.

7. Composant composite stratifié selon la revendication 5 ou 6, dans lequel les premier et second volumes comprennent un matériau de remplissage (176).

8. Composant composite stratifié selon l'une quelconque des revendications précédentes, dans lequel l'élément initiateur est délimité par des éléments de renfort à travers l'épaisseur (178).

9. Composant composite stratifié selon l'une quelconque des revendications précédentes, dans lequel le composant comprend un logement de roulement avant (2) d'un moteur à turbine à gaz.
